(19) **Europäisches Patentamt / European Patent Office / Office européen des brevets**

(11) **EP 2 256 315 B1**

(12) **EUROPEAN PATENT SPECIFICATION**

(45) Date of publication and mention
of the grant of the patent:
**20.07.2016 Bulletin 2016/29**

(51) Int Cl.:
*F02F 7/00* (2006.01)  *F02B 75/18* (2006.01)
*F16F 15/26* (2006.01)

(21) Application number: **09725547.5**

(22) Date of filing: **26.03.2009**

(86) International application number:
**PCT/JP2009/056058**

(87) International publication number:
**WO 2009/119712 (01.10.2009 Gazette 2009/40)**

(54) **BALANCER MECHANISM FOR STRAIGHT ENGINE**

AUSGLEICHSMECHANISMUS FÜR EINEN REIHENMOTOR

MÉCANISME D'ÉQUILIBRAGE POUR MOTEUR EN LIGNE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **28.03.2008 JP 2008086226**

(43) Date of publication of application:
**01.12.2010 Bulletin 2010/48**

(73) Proprietor: **Kabushiki Kaisha Toyota Jidoshokki
Kariya-shi, Aichi 448-8671 (JP)**

(72) Inventor: **NAGIRA, Tetsushi
Kariya-shi
Aichi 448-8671 (JP)**

(74) Representative: **TBK
Bavariaring 4-6
80336 München (DE)**

(56) References cited:
**FR-A1- 2 512 110      JP-A- S5 698 531
JP-A- 60 245 852      JP-A- S49 117 806
JP-A- 2007 224 836    JP-A- 2007 224 836
JP-A- 2009 236 085    JP-B- 54 002 333
US-A- 4 628 876**

**Description**

TECHNICAL FIELD

The present invention relates to a balancer mechanism applied to a straight engine having an odd number of three or more cylinders.

BACKGROUND ART

A straight three cylinder engine may employ a balancer mechanism having a single shaft type balance shaft, as described in Patent Documents 1 and 2, in order to decrease the first order inertia couple.

The balancer mechanism converts the first order inertia couple, which is produced by a reciprocating portion, into a smooth "precession" by balancing half the inertia couple by means of the weight of a crankshaft. Then, using a balance shaft rotating in the direction opposite to the rotational direction of the crankshaft at a speed equal to the rotational speed of the crankshaft, an inertia couple having a phase opposite with respect to that of the inertia couple of the crankshaft is generated. This cancels the first order inertia couple produced by the reciprocating portion.

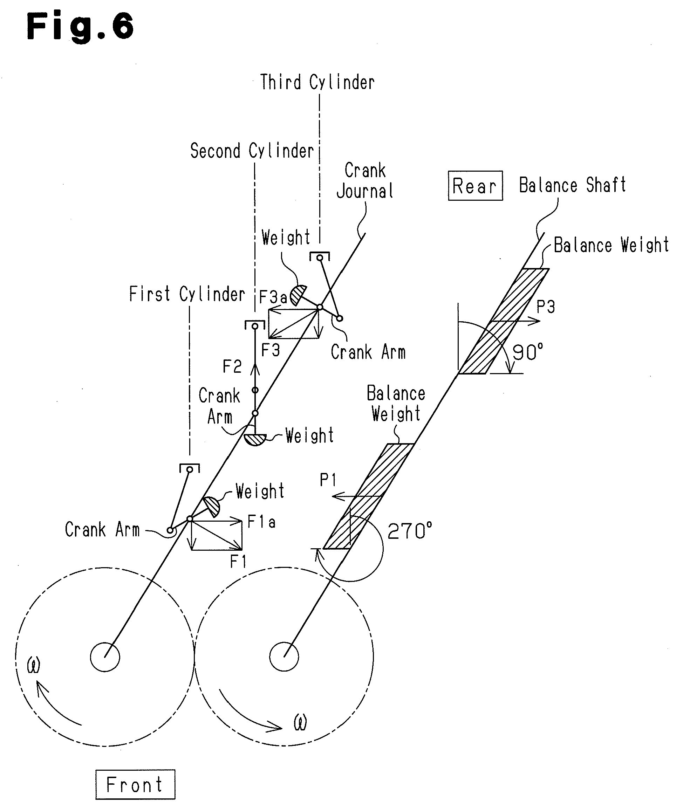

In a straight three cylinder engine, crank pins are arranged to be spaced apart at 120°. The angular phase of the balance shaft, which cancels the first order inertial couple, is as illustrated in Fig. 6 with respect to a reference state in which the piston of the second cylinder is at the top dead center. As viewed in Fig. 6, the crankshaft rotates in a clockwise direction and the balance shaft rotates in a counterclockwise direction. Specifically, in a generalized description in which the piston of the first cylinder is at the top dead center, the crankshaft is located at a position rotated clockwise by 120°, and the balance shaft is located at a position rotated counterclockwise by 120° each with respect to the state illustrated in Fig. 6. In this state, a front balance weight of the balance shaft is located at 150° (= 270° - 120°) and a rear balance weight of the balance shaft is located at 330° (= 90°- 120° = -30°).

Recently, the friction from pistons have been regarded as a problem. To decrease the friction from pistons, offset crank systems have been employed in many cases (see, for example, Patent Documents 3 to 5).

If the offset crank system is employed in a straight three cylinder engine having a balancer mechanism, the residual pitching moment increases, thus worsening the vibration. To prevent the vibration from being worsened, countermeasures may be taken in an engine mount. Specifically, damping force may be varied by adjusting the amount of the oil sealed in a hydraulic engine mount. Alternatively, an active mount may be employed to generate vibration with a phase opposite to the phase of the vibration of the mount caused by the engine through electronic control. However, in these cases, the mass of the engine mount increases and higher cost is necessary. Further, the increased mass of the engine mount reduces fuel efficiency.

To solve these problems, the vibration must be prevented without taking countermeasures involving the engine mount.

The following are considerations about increase of the residual pitching moment.

The use of the offset crank system causes change of the waveform of the pitching moment, which is produced by the mass of the reciprocating portion. Specifically, in this case, the residual pitching moment increases compared to a conventional balancer mechanism without an offset crank system.

Essentially, the pitching moment caused by the reciprocating portion includes not only a first order component but also a second or higher order component. Since the second order component is a component rotating at twice the speed of the crankshaft, a first order balancer mechanism cannot cancel the second order component. As a result, the second order component remains as the residual moment. The residual pitching moment increases when the offset crank system is employed.

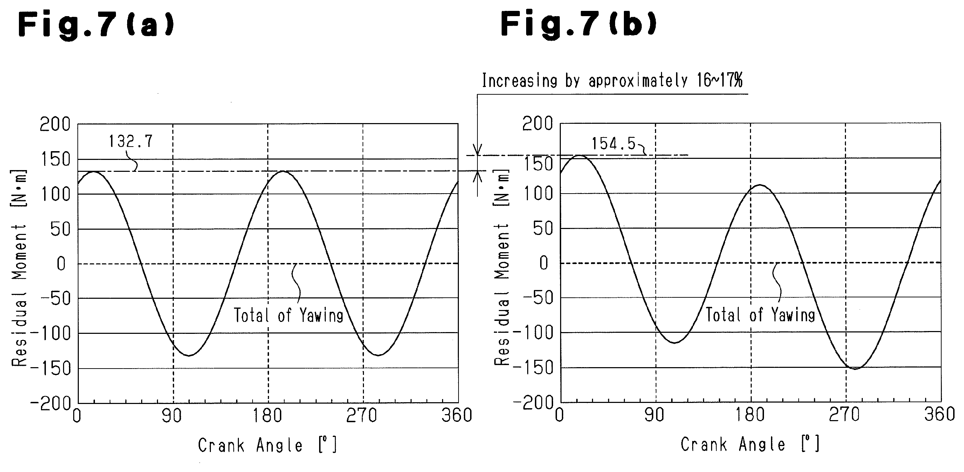

Fig. 7(a) represents the residual moment when the offset crank system is not employed. Fig. 7(b) represents the residual moment when the offset crank system is employed. In Figs. 7(a) and 7(b), the solid lines indicate the sum of the pitching moment and the chain lines indicate the sum of the yawing moment. With reference to Fig. 7(b), the use of the offset crank system increases the residual pitching moment by approximately 17% ($\approx$(154.5-132.7)/132.7).

Patent Document 1: JP S54-2333 A
Patent Document 2: FR 2 512 110 A
Patent Document 3: JP S56-98531 A
Patent Document 4: US 4 628 876 A
Patent Document 5: JP 2007-224836 A

SUMMARY OF THE INVENTION

Accordingly, it is an objective of the present invention to provide a balancer mechanism applied to a straight engine having an odd number of three or more cylinders that prevents or reduces rise of residual pitching moment of a second order component caused by an offset crank system.

To achieve the foregoing objective and in accordance with one aspect of the present invention, a balancer mechanism applied to a straight engine is provided. The engine includes an odd number of three or more cylinders, a crankshaft having a crank journal, crank arms, a reciprocating portion and a rotating portion, and a crank weight. The crank arms are arranged in the crank journal in correspondence with the respective cylinders and spaced apart at a predetermined angular interval. The reciprocating portion and a rotating portion each have a mass such that an inertia couple is generated in the crankshaft. The crank weight is arranged in the crankshaft in order to reduce some of the inertia couple, thereby producing a combined inertia couple in the crankshaft. The axes of the cylinders are arranged to be at an offset with respect to the axis of the crank journal. The balancer mechanism includes a balance shaft and a balance weight. The balance shaft extends parallel to the crank journal and rotating in a direction opposite to a rotational direction of the

crank journal at a speed equal to that of the crank journal's rotational speed. The balance weight is arranged in the balance shaft in order to cancel the combined inertia couple. The phase of a rotation angle of the balance shaft with respect to a rotation angle of the crank journal is retarded by a predetermined angle with respect to such a reference phase that it can cancel the combined inertia force generated in a case where the axes of the cylinders cross the axis of the crank journal.

BRIEF DESCRIPTION OF THE DRAWINGS

Fig. 1 is a side view showing an engine according to one embodiment of the present invention;
Fig. 2 is a perspective view showing a balancer mechanism illustrated in Fig. 1;
Figs. 3(a) and 3(b) are graphs each showing simulation results concerning pitching moment;
Figs. 4(a), 4(b), 4(c), and 4(d) are graphs each showing simulation results concerning moment;
Fig. 5 is a graph representing the relationship between an offset coefficient and a phase angle increase amount;
Fig. 6 is a perspective view showing a crankshaft system and a balance shaft system; and
Figs. 7(a) and 7(b) are graphs showing simulation results concerning residual moment.

BEST MODE FOR CARRYING OUT THE INVENTION

One embodiment of the present invention, which is employed in an automobile engine, will now be described with reference to the attached drawings.

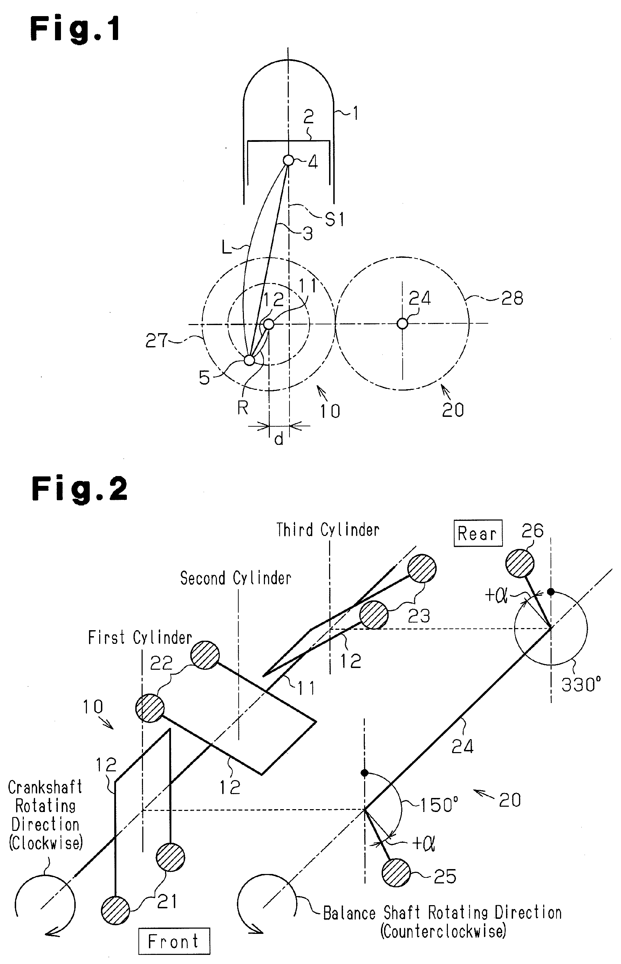

In a straight three cylinder engine, as shown in Fig. 1, a piston 2 is received in each cylinder 1 (only one is shown) in a manner slidable in an up-and-down direction. The upper end of a connecting rod 3 is rotatably connected to the piston 2 with a piston pin 4.

A crankshaft 10 has a crank journal 11 and crank arms 12 corresponding to the respective cylinders 1, which are arranged in the crank journal 11. The lower end of the connecting rod 3 of each of the cylinders 1 is rotatably linked to the corresponding one of the crank arms 12 with a crank pin 5.

With reference to Fig. 2, the crank arms 12 for the three cylinders 1 are arranged sequentially and spaced apart at 120° with respect to the crank journal 11 of the crankshaft 10.

The straight three cylinder engine employs an offset crank system. Specifically, the axis S1 of each cylinder 1 is arranged offset by a predetermined amount d with respect to the axis of the crank journal 11.

Each of the crank arms 12 has a pair of crank weights 21, 22, 23. Each pair of the crank weights 21, 22, 23 are located at the side opposite to the axis of the associated crank arm 12 with respect to the axis of the crank journal 11. Each of the crank weights 21, 22, 23 has a mass corresponding to the sum of the mass of the rotating portions (the portions related to the crankshaft) of the corresponding cylinder 1 and the half the mass of the reciprocating portions (the portions related to the piston). Accordingly, a first order combined inertial force F1, F2, F3 (see Fig. 6), which is produced by inertial rotation force caused by the half mass of the reciprocating portions and the inertial force of reciprocation caused by the reciprocating portions, remain in each cylinder 1. That is, the combined inertial force acting in a direction rotating in the direction opposite to the rotational direction of the crankshaft 10 remains in each cylinder 1. Further, as illustrated in Fig. 6, an inertia couple is produced in the crankshaft 10 by a force component F1a of the residual combined inertial force F1 produced in the first cylinder and a force component F3a of the residual combined inertial force F3 generated in the third cylinder. In other words, some of the inertia couple produced in the crankshaft 10 by the mass of the reciprocating portions and the mass of the rotating portions is reduced by the crank weights 21, 22, 23, which are arranged in the crankshaft 10, and thus become a combined inertia couple (which is, in Fig. 6, the force components F1a and F3a). This causes smooth "precession" of the crankshaft 10. Specifically, by balancing half the first order inertia couple caused by the reciprocating portions by means of the crank weights 21, 22, 23, the smooth "precession" of the crankshaft 10 about the second cylinder is brought about.

The rotating portions include the crank arms and the crank pins, and the reciprocating portions include the pistons and the piston pins. A small end portion of each connecting rod 3 at the side corresponding to the piston 2 is included in the reciprocating portions. A large end portion of the connecting rod 3 at the side corresponding to the crankshaft 10 is included in the rotating portions.

With reference to Figs. 1 and 2, the straight three cylinder engine includes a single shaft type balancer mechanism 20 having a balance shaft 24 and balance weights 25, 26. The balance shaft 24 is arranged parallel to the crank journal 11. The crank journal 11 and the balance shaft 24 are connected to each other with gears 27, 28. The balance shaft 24 rotates in the direction opposite to the rotational direction of the crank journal 11 and at the speed equal to the speed of the crank journal 11. The balance shaft 24 has balance weights 25, 26 for canceling the combined inertia couple generated in the crankshaft 10. The balance weights 25, 26 are arranged forward and rearward, respectively, in the axial direction of the balance shaft 24, or in other words, at the side corresponding to the first cylinder and the side corresponding to the third cylinder, respectively, with respect to the second cylinder. This arrangement ensures generation of the inertial force P1 acting in the opposite direction to the acting direction of the force component F1a of the combined inertial force F1 in the first cylinder and the inertial force P3 acting in the opposite direction to the acting direction of the force component F3a of the combined inertial force F3 in the third cylinder. As a result, the "precession" of the crankshaft 10 caused by the inertia couple is eliminated (canceled).

As has been described, an offset crank system is employed. Accordingly, as illustrated in Fig. 2, the phase of the rotation angle of the balance shaft 24 with respect to the rotation angle of the crank journal 11 is retarded by a predetermined amount $\alpha$ with respect to a reference phase. The reference phase is such a phase that can cancel the inertia couple produced in the crankshaft 10 when the offset crank system is not employed, or in other words, the axis S1 of each cylinder 1 crosses the axis of the crank journal 11.

The "phase that can cancel the inertia couple when the offset crank system is not employed" is defined as illustrated in Fig. 6, with respect to a reference state where the piston of the second cylinder is at the top dead center. Specifically, the front balance weight of the balance shaft is arranged at the position of 270° where the front balance weight is located at the side corresponding to the crank arm of the first cylinder and extends perpendicular to the crank arm of the second cylinder. Further, the rear balance weight of the balance shaft is arranged at the position at 90° where the rear balance weight is located at the side corresponding to the crank arm of the third cylinder and extends perpendicular to the crank arm of the second cylinder. Accordingly, with respect to a generalized description where the piston 2 of the first cylinder is at the top dead center, the position of the balance shaft that cancels the inertial force is the position where the front balance weight of the balance shaft is arranged at 150° (270° - 120°) and the rear balance weight of the balance shaft is arranged at 330° (90° - - 120° = -30°) with respect to the first cylinder.

However, in the present embodiment, as illustrated in Fig. 2, the angle corresponding to the position of the front balance weight (the mass balance) 25 of the balance shaft 24 and the angle corresponding to the position of the rear balance weight (the mass balance) 26 of the balance shaft 24 are increased from 150° and 330°, respectively, by the same equal amount $\alpha$ [°].

As has been described, to prevent the increase of the residual pitching moment caused by the offset crank system, the angular phase of the balance shaft is retarded with respect to the angular phase of the balance shaft in a normal state, which is the state without the offset crank system.

Specifically, the retarding amount $\alpha$ of the phase becomes smaller as the ratio $\lambda$ between the connecting rod length and the crank arm radius becomes greater. The ratio $\lambda$ is represented by the expression L/R, where L represents the length of the connecting rod 3 (the distance between the axes of the pins 4, 5 of the connecting rod 3) and R represents the radius of the crank arm 12 (the rotation radius of the crank pin 5), with reference to Fig. 1.

Further, the retarding amount $\alpha$ of the phase becomes greater as the offset amount d between the axis S1 of each cylinder 1 and the axis of the crank journal 11 becomes greater. Specifically, an offset coefficient $\xi$ is defined by the expression d/R, where d represents the offset amount and R represents the radius of the crank arm 12. As the offset coefficient $\xi$ becomes greater, the retarding amount $\alpha$ of the phase becomes greater.

When the offset crank system is employed, the waveform of the pitching moment caused by the mass of the reciprocating portions changes, thus increasing the second order component remaining as the residual moment compared to a conventional case (which is, as illustrated in Fig. 6, the case in which the front balance weight of the balance shaft is arranged at 150° and the rear balance weight of the balance shaft is arranged at 330° when the piston 2 of the first cylinder is at the top dead center). However, by retarding the phase of the rotation angle of the balance shaft by the predetermined amount, the second order component of the pitching moment remaining as the residual moment is eliminated or reduced.

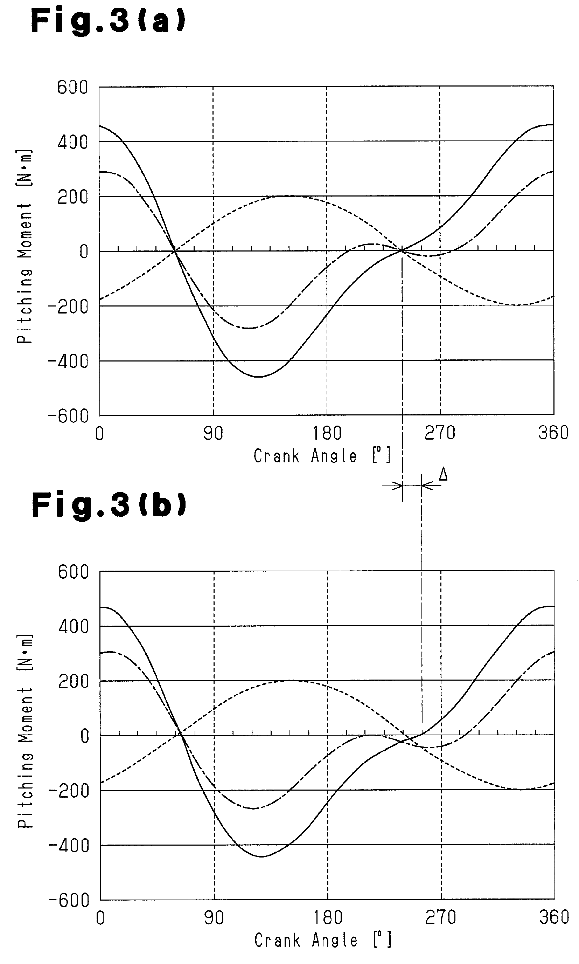

The difference in the pitching moment between a case with the offset crank system and a case without the offset crank system will hereafter be described with reference to Figs. 3(a) and 3(b).

Fig. 3(a) represents the pitching moment in the case without the offset crank system. Fig. 3(b) represents the pitching moment in the case with the offset crank system. In Figs. 3(a) and 3(b), the axis of abscissas represents the crank angle and the axis of ordinate represents the pitching moment. In each of the graphs, the solid line represents the moment caused by the inertial force of the reciprocating portions (the moment caused mainly by the piston), the chain line represents the moment caused by the rotating portions (the moment caused mainly by the crankshaft), and the sum of these moments is represented by the single-dotted broken line.

With reference to Fig. 3(a), when the moment caused by the inertial force of the reciprocating portions is zero, the moment caused by the rotating portions is also zero. In this state, the crank angle is approximately 240°. As represented in Fig. 3(b), the moment caused by the inertial force of the reciprocating portions is zero when the crank angle is approximately 255°.

Accordingly, by considering the difference in the generated pitching moment between the case with the offset crank system and the case without the offset crank system, it is found that the pitching moment produced in the reciprocating portions in the case with the offset crank system, as illustrated in Fig. 3(b), has a waveform that is offset rightward as viewed in the graph (in an advancing direction) with respect to the waveform of the pitching moment illustrated in Fig. 3(a). Accordingly, by slightly retarding the angular phase of the balance shaft in a corresponding manner, the increase of the pitching moment is canceled.

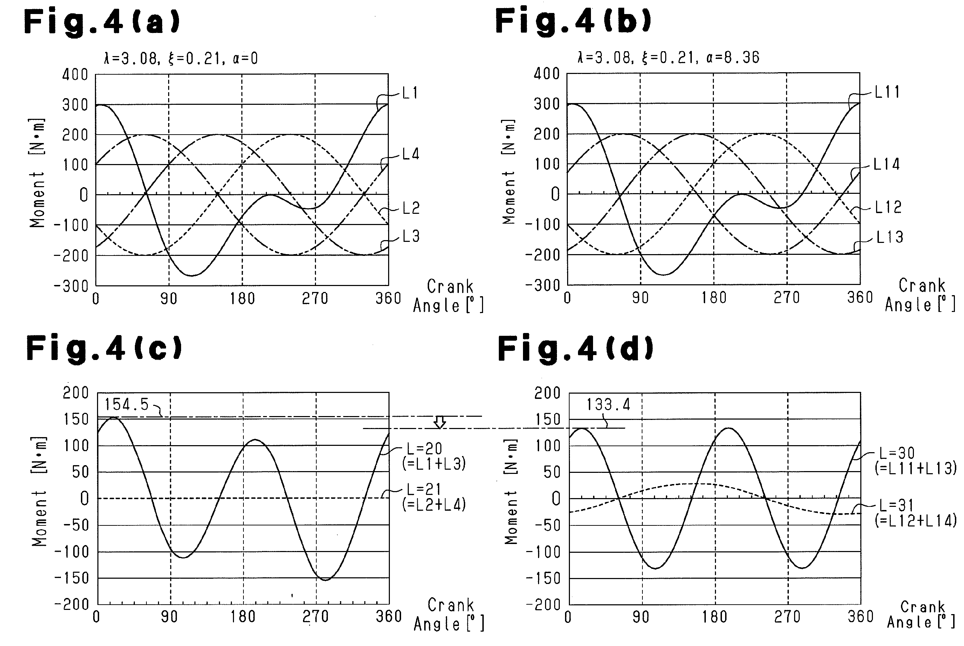

The retarding amount $\alpha$ of the phase will hereafter be described with reference to Figs. 4(a), 4(b), 4(c), and 4(d).

Fig. 4(a) represents a case without retardation of the angular phase of a balance shaft in a straight three cylinder engine employing the offset crank system. The graph represents the sum (L1 in the graph) of the pitching moment and the sum (L2 in the graph) of the yawing moment produced in the kinetic system and the sum (L3 in the graph) of the pitching moment and the sum (L4 in the graph) of the yawing moment produced in the balancer mechanism. Fig. 4(b) represents a case in which the angular phase of the balance shaft is retarded by a predetermined amount with respect to the case of Fig. 4(a). The graph represents the sum (L11 in the graph) of the pitching moment and the sum (L12 in the graph) of the yawing moment produced in the kinetic system and the sum (L13 in the graph) of the pitching moment and the sum (L14 in the graph) of the yawing moment produced in the balancer mechanism. In Figs. 4(a) and 4(b), the abscissa axis represents the crank angle and the ordinate axis represents the moment.

The sum of the values L1 and L3 in Fig. 4(a), which is the sum of the pitching moments, is represented as the total pitching moment L20 in Fig. 4(c). The sum of the values L2 and L4 in Fig. 4(a), which is the sum of the yawing moments, is represented as the total yawing moment L21 in Fig. 4(c).

Similarly, the sum of the values L11 and L13 in Fig. 4(b), which is the sum of the pitching moments, is represented as the total pitching moment L30 in Fig. 4(d). The sum of the values L12 and L14 in Fig. 4(b), which is the sum of the yawing moments, is represented as the total yawing moment L31 in Fig. 4(d).

By comparing the residual moment L20 in the case of Fig. 4(c) without the retardation of the angular phase of the balance shaft in the straight three cylinder engine employing the offset crank system with the residual moment L30 in the case of Fig. 4(d) with the retardation of the angular phase of the balance shaft by the predetermined amount, the finding described below is obtained.

Specifically, by increasing the phase angle of the balance shaft by an appropriate amount $\alpha$ [°], the phase of the pitching moment caused in the balancer mechanism is entirely shifted by the amount $\alpha$ [°] rightward as viewed in the graph compared to the case of Fig. 4(c). This decreases the final residual pitching moment, which is determined by adding the pitching moment generated in the kinetic system to the pitching moment produced in the balancer mechanism, to a level substantially equal to the level in the case of Fig. 7(a) without the offset crank system. Specifically, the second order component of the pitching moment is 133.4 N·m in Fig. 4(d) and 132.7 N·m in Fig. 7(a), which are at substantially equal levels.

Comparison between L4 in Fig. 4(a) and L14 in Fig. 4(b) shows that the yawing moment L14 caused by the balancer mechanism in the case of Fig. 4(b) employing the offset crank system is offset by the amount $\alpha$ [°]. With reference to Fig. 4(a), the phase of the yawing moment L4 caused by the balancer mechanism is completely opposite to the phase of the yawing moment L2 produced by the kinetic system. The yawing moment L2 and the yawing moment L4 are thus completely canceled as represented by L21 in Fig. 4(c). Contrastingly, in the case of Fig. 4(d), a slight amount of additional residual yawing moment is generated as represented by L31. However, the level of the residual yawing moment L13 is sufficiently low compared to the pitching moment L30. Further, horizontal vibration caused by the yawing moment is less easily sensed by human beings than pitching caused by the pitching moment. Also, since the residual yawing moment L31 is the first order component and has a cycle longer than the cycle of the pitching moment L30, the residual yawing moment L31 is less easily sensed by human beings.

The description below is of simulations on different types of engines about a phase angle increase amount $\alpha$ in cases with different offset amounts of the offset crank system, different lengths of the connecting rod, different ratios between the connecting rod length and the crank arm radius, and different offset coefficients. Specifically, the phase angle increase amount $\alpha$ was determined with reference to a state in which the piston 2 of the first cylinder was at top dead center. That is, the phase angle increase amount $\alpha$ of the front balance weight was determined with respect to 150°, and the phase angle increase amount $\alpha$ of the rear balance weight was determined with respect to 330°.

Tables 1, 2, 3, 4, and 5 show the conditions and the results of the simulations.

[Table 1]

| | Engine A (Connecting Rod Length/Crank Arm Radius: 3.08) | | | | | | | |
|---|---|---|---|---|---|---|---|---|
| Crank Offset [mm] | 0 | 5 | 10 | 15 | 20 | 25 | 30 | 34 |
| Connecting Rod Length /Crank Arm Radius | 3,0806 | | | | | | | |
| Offset Coefficient | 0.00 | 0.10 | 0.21 | 0.31 | 0.42 | 0.52 | 0.63 | 0.71 |
| Mass of Reciprocating Portions [kg] | 1.1258 | | | | | | | |
| Mass of Rotating Portions [kg] | 0.5939 | | | | | | | |
| Front Balancer Phase Angle [°] | 150 | 154.37 | 158.38 | 162.53 | 166.63 | 170.73 | 174.65 | 177.78 |
| Rear Balancer Phase Angle [°] | 330 | 334.37 | 338.38 | 342.53 | 346.63 | 350.73 | 354.65 | 357.78 |
| Phase Angle Increase Amount $\alpha$ [deg] | 0 | 4.37 | 8.38 | 12.53 | 16.63 | 20.73 | 24.65 | 27.78 |
| Residual Pitching Moment [N·m] | 132.7 | 133.4 | 133.5 | 134.4 | 135.8 | 137.7 | 140.1 | 142.5 |
| Residual Yawing Moment [N·m] | 0 | 15.2 | 29.1 | 43.9 | 58.8 | 74.4 | 89.7 | 102.6 |

[Table 2]

| | Engine B (Connecting Rod Length/Crank Arm Radius: 3.36) | | | | | | | |
|---|---|---|---|---|---|---|---|---|
| Crank Offset [mm] | 0 | 4 | 8 | 12 | 16 | 20 | 24 | 28 | 32 |
| Connecting Rod Length /Crank Arm Radius | 3.3607 | | | | | | | |
| Offset Coefficient | 0.00 | 0.10 | 0.19 | 0.29 | 0.38 | 0.48 | 0.57 | 0.67 | 0.76 |
| Mass of Reciprocating Portions [kg] | 0.3217 | | | | | | | |
| Mass of Rotating Portions [kg] | 0.273 | | | | | | | |
| Front Phase Angle [°] | 150 | 153.46 | 156.91 | 160.36 | 163.67 | 167.05 | 170.37 | 173.65 | 177.01 |
| Rear Balancer Phase Angle [°] | 330 | 333.46 | 336.91 | 340.36 | 343.67 | 347.05 | 350.37 | 353.65 | 357.01 |
| Phase Angle Increase Amount $\alpha$ [deg] | 0 | 3.46 | 6.91 | 10.36 | 13.67 | 17.05 | 20.37 | 23.65 | 27.01 |
| Residual Pitching Moment [N·m] | 24.3 | 24.4 | 24.4 | 24.6 | 24.8 | 25 | 25.3 | 25.6 | 25.9 |
| Residual Yawing Moment [N·m] | 0 | 2.4 | 4.8 | 7.3 | 9.7 | 12.2 | 14.7 | 17.3 | 20.1 |

[Table 3]

| | Engine C (Connecting Rod Length/Crank Arm Radius: 3.08) | | | | | | |
|---|---|---|---|---|---|---|---|
| Crank Offset [mm] | 0 | 6 | 12 | 18 | 24 | 30 | 36 |
| Connecting Rod Length /Crank Arm Radius | 3.0777 | | | | | | |
| Offset Coefficient | 0.00 | 0.12 | 0.23 | 0.35 | 0.47 | 0.58 | 0.70 |
| Mass of Reciprocating Portions [kg] | 1.6043 | | | | | | |
| Mass of Rotating Portions [kg] | 0.9047 | | | | | | |
| Front Balancer Phase Angle [°] | 150 | 154.68 | 159.34 | 163.97 | 168.51 | 173 | 177.39 |
| Rear Balancer Phase Angle [°] | 330 | 334.68 | 339.34 | 343.97 | 348.51 | 353 | 357.39 |
| Phase Angle Increase Amount $\alpha$ [deg] | 0 | 4.68 | 9.34 | 13.97 | 18.51 | 23 | 27.39 |
| Residual Pitching Moment [N·m] | 228.8 | 229.2 | 230.5 | 232.6 | 235.7 | 239.8 | 245.2 |
| Residual Yawing Moment [N·m] | 0 | 28 | 56 | 84.5 | 113.4 | 143.1 | 173.9 |

[Table 4]

| | Engine C (Connecting Rod Length/Crank Arm Radius: 2.82) | | | | | | |
|---|---|---|---|---|---|---|---|
| Crank Offset [mm] | 0 | 6 | 12 | 18 | 24 | 30 | 32 |
| Connecting Rod Length /Crank Arm Radius | 2.8155 | | | | | | |
| Offset Coefficient | 0.00 | 0.12 | 0.23 | 0.35 | 0.47 | 0.58 | 0.62 |
| Mass of Reciprocating Portions [kg] | 1.6043 | | | | | | |
| Mass of Rotating Portions [kg] | 0.9047 | | | | | | |
| Front Balancer Phase Angle [°] | 150 | 155.21 | 160.42 | 165.46 | 170.6 | 175.58 | 177.22 |
| Rear Balancer Phase Angle [°] | 330 | 335.21 | 340.42 | 345.46 | 350.6 | 355.58 | 357.22 |
| Phase Angle Increase Amount $\alpha$ [deg] | 0 | 5.21 | 10.42 | 15.46 | 20.6 | 25.58 | 27.22 |
| Residual Pitching Moment [N·m] | 251.7 | 252.3 | 254 | 257.3 | 261.3 | 267.2 | 269.5 |
| Residual Yawing Moment [N·m] | 0 | 31.1 | 62.6 | 93.7 | 126.7 | 160.4 | 171.9 |

[Table 5]

| | Engine A (Connecting Rod Length/Crank Arm Radius: 3.86) | | | | | | | | | |
|---|---|---|---|---|---|---|---|---|---|---|
| Crank Offset [mm] | 0 | 5 | 10 | 15 | 20 | 25 | 30 | 35 | 40 | 45 |
| Connecting Rod Length /Crank Arm Radius | 3.8638 | | | | | | | | | |
| Offset Coefficient | 0.00 | 0.10 | 0.21 | 0.31 | 0.42 | 0.52 | 0.63 | 0.73 | 0.84 | 0.94 |
| Mass of Reciprocating Portions [kg] | 1.1258 | | | | | | | | | |
| Mass of Rotating Portions [kg] | 0.5939 | | | | | | | | | |
| Front Balancer Phase Angle [°] | 150 | 153.24 | 156.48 | 159.69 | 162.88 | 166.04 | 169.13 | 172.2 | 175.2 | 178.15 |
| Rear Balancer Phase Angle [°] | 330 | 333.24 | 336.48 | 339.69 | 342.88 | 346.04 | 349.13 | 352.2 | 355.2 | 358.15 |
| Phase Angle Increase Amount $\alpha$ [deg] | 0 | 3.24 | 6.48 | 9.69 | 12.88 | 16.04 | 19.13 | 22.2 | 25.2 | 28.15 |
| Residual Pitching Moment [N·m] | 104.7 | 104.7 | 105 | 105.4 | 106.1 | 106.9 | 108 | 109.2 | 110.7 | 112.5 |
| Residual Yawing Moment [N·m] | 0 | 11.2 | 22.5 | 33.8 | 45.2 | 56.8 | 68.4 | 80.3 | 92.5 | 104.9 |

With reference to Tables 1, 2, 3, 4, and 5, three types of engines (an engine A, an engine B, and an engine C) were used. The engine A was used in the simulation represented by Table 1, the engine B was used in the simulation represented by Table 2, and the engine C was used in the simulation represented by Table 3. The engine C was also used in the simulation represented by Table 4, and the engine A was also used in the simulation represented by Table 5. Specifically, the ratio between the connecting rod length and the crank arm radius was "3.0806" in the simulation corresponding to Table 1, "3.3607" in the simulation corresponding to Table 2, and "3.0777" in the simulation corresponding to Table 3. Although the simulation corresponding to Table 4 used the same type of engine as the engine used in the simulation corresponding to Table 3, the length of the connecting rod in the simulation corresponding to Table 4 was smaller than that of the simulation corresponding to Table 3. The ratio between the connecting rod length and the crank arm radius was thus "2.8155" in the simulation corresponding to Table 4. Further, although the simulation corresponding to Table 5 used the same type of engine as the engine used in the simulation corresponding to Table 1, the length of the connecting rod in the simulation corresponding to Table 5 was greater than that of the simulation corresponding to Table 1. The ratio between the connecting rod length and the crank arm radius was thus "3.8638" in the simulation corresponding to Table 5.

As to the offset amount between the axis S1 of each cylinder 1 and the axis of the crank journal 11, eight offset amounts, nine offset amounts, seven offset amounts, seven offset amounts, and ten offset amounts, each including the offset amount of zero, were used in the simulation corresponding to Table 1, the simulation corresponding to Table 2, the simulation corresponding to Table 3, the simulation corresponding to Table 4, and the simulation corresponding to Table 5, respectively. In these simulations, the phase angle of the front balance weight 25, the phase angle of the rear balance weight 26, and the phase angle increase amount $\alpha$ were changed in correspondence with the offset amounts (the offset coefficients). In the simulations corresponding to Tables 1 to 5, the phase angle of the front balance weight 25 and the phase angle of the rear balance weight 26 at the time when the offset amount was zero were 150° and 330°, respectively, and the phase angle increase amount was "zero". The residual pitching moment and the residual yawing moment were calculated in correspondence with the offset amounts (the offset coefficients).

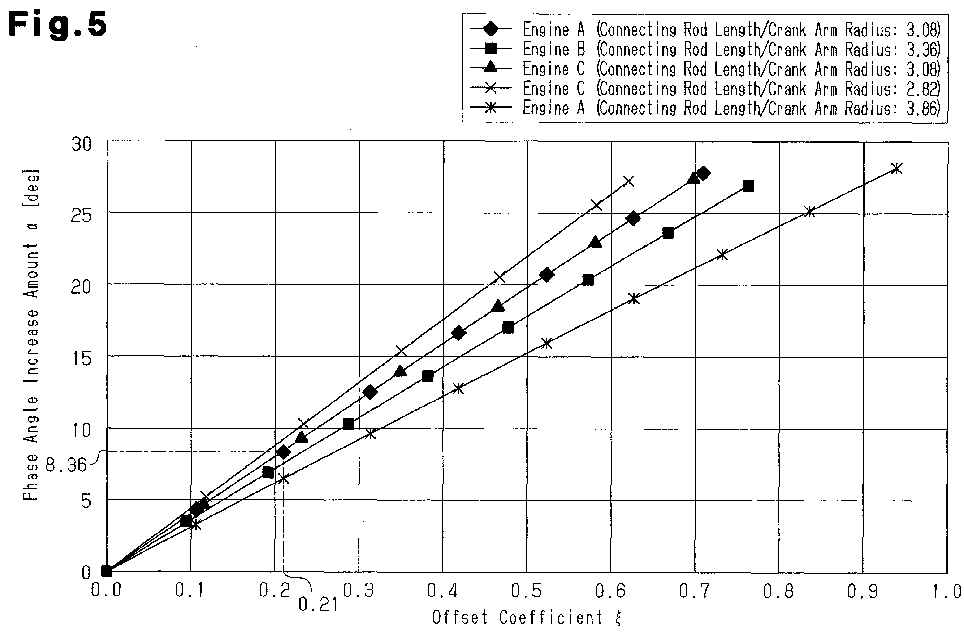

Fig. 5 shows the data represented in Tables 1, 2, 3, 4, and 5 in an organized manner.

In Fig. 5, the abscissa axis represents the offset coefficient, and the ordinate axis represents the phase angle increase amount. As is clear from Fig. 5, the points are plotted on the corresponding line for every ratio between the connecting rod length and the crank arm radius. In other words, the phase angle increase amount is directly determined by the ratio between the connecting rod length and the crank arm radius and the offset coefficient.

Specifically, the phase angle increase amount can be obtained in a simplified manner by substituting, into the following expression, the ratio $\lambda$ between the connecting rod length and the crank arm radius and the offset coefficient $\xi$.

$$\alpha = (147 \cdot \lambda^{-1.15}) \cdot \xi$$

In the expression, the ratio $\lambda$ represents the connecting rod length L/the crank arm radius R. The offset coefficient $\xi$ represents the offset amount d between the axis of the cylinder and the axis of the crank journal/the radius R of the crank arm.

Fig. 4(a) represents the moment at the time when the ratio $\lambda$ between the connecting rod length and the crank arm radius is 3.08, the offset coefficient $\xi$ is 0.21, and the phase angle increase amount $\alpha$ is 0. Fig. 4(b) represents the moment at the time when the ratio $\lambda$ between the connecting rod length and the crank arm radius is 3.08, the offset coefficient $\xi$ is 0.21, and the phase angle increase amount $\alpha$ is 8.36.

As has been described, vibration is prevented from being worsened by changing the angular phase of the balance shaft, which is a simple and low-cost method without increasing the mass, in the straight three cylinder engine having the balancer mechanism and employing the offset crank system. Specifically, if countermeasures are taken in the engine mount to prevent the vibration from being worsened, the costs and the mass are increased, and fuel efficiency is reduced. However, the present embodiment does not increase the costs or the mass. Accordingly, countermeasures for preventing vibration from being worsened can be taken without reducing fuel efficiency.

The above described embodiment has the advantages described below.

(1) The phase of the rotation angle of the balance shaft 24 with respect to the rotation angle of the crank journal 11 in the straight three cylinder engine employing the offset crank system is retarded with respect to the reference rotation angle phase of the balance shaft 24 that can cancel the combined inertia couple produced in the crankshaft 10 in the engine in which the axis S1 of each cylinder 1 crosses the axis of the crank journal 11, or in other words, an engine without the offset crank system. Specifically, with respect to the reference rotation angle phase, the balance weight 25 located at the side corresponding to the first cylinder and the balance weight 26 arranged at the side corresponding to the third cylinder are retarded by the same predetermined amounts $\alpha$. This prevents or reduces the increase of the residual pitching moment of the second order component with respect to the conventional case (in which, as illustrated in Fig. 6, the front balance weight is arranged at 150° and the rear balance weight is at 330° in the balance shaft when the cylinder 2 of the first cylinder is at the top dead center) due to the offset crank system.

(2) It is desirable to decrease the phase retarding amount $\alpha$ as the ratio $\lambda$ between the connecting rod length and the crank arm radius increases.

(3) It is desirable to increase the phase retarding amount $\alpha$ as the offset amount d increases.

(4) It is desirable to determine the phase retarding amount $\alpha$ in correspondence with the ratio $\lambda$ between the connecting rod length and the crank arm radius and the offset coefficient $\xi$, using the expression below.

$$\alpha = (147 \cdot \lambda^{-1.15}) \cdot \xi$$

In the expression, the ratio $\lambda$ represents the connecting rod length L/the crank arm radius R. The offset coefficient $\xi$ represents the offset amount d /the radius R of the crank arm.

In the above described embodiment, the description was presented of an arrangement of the crank weight in which the mass of each crank weight, which is arranged in the corresponding arm of the crankshaft, corresponds to the sum of the mass of the rotating portions of the cylinder and half the mass of the reciprocating portions of the cylinder. However, the invention is not restricted to such a crank weight arrangement. That is, the arrangement of the crank weights and the mass of each weight may be changed in various suitable manners in order to, for example, reduce the total mass of the crankshaft. Alternatively, a weight serving as a crank weight may be arranged outside of the crankshaft (including the pulley arranged forward of the crankshaft and the flywheel located rearward of the crankshaft). In these cases, the invention is embodied as effectively as in the illustrated embodiment. Such modifications may be employed as necessary as long as some of the inertia couple, which is caused in the crankshaft by the mass of the reciprocating portions and the mass of the rotating portions, is reduced by a crank weight arranged at the side corresponding to the crankshaft and converted into combined inertia couple.

The balancer mechanism according to the present invention may be used in any straight engine having an odd number of cylinders other than the straight three cylinder engine, such as a straight five cylinder engine or a straight seven cylinder engine.

## Claims

1. A balancer mechanism (20) applied to a straight engine, the engine including:

   an odd number of three or more cylinders (1);
   a crankshaft (10) having a crank journal (11);
   crank arms (12) arranged in the crank journal (11) in correspondence with the respective cylinders (1) and spaced apart at a predetermined angular interval;
   a reciprocating portion and a rotating portion each having a mass such that an inertia couple is generated in the crankshaft (10); and
   a crank weight (21, 22, 23) arranged in the crankshaft (10) in order to reduce some of the inertia couple, thereby producing a combined inertia couple in the crankshaft (10),
   the balancer mechanism (20) comprising:

   a balance shaft (24) extending parallel to the crank journal (11) and rotating in a direction opposite to a rotational direction of the crank journal (11) at a speed equal to a rotational speed of the crank journal (11); and
   a balance weight (25, 26) arranged in the balance shaft (24) in order to cancel the combined inertia couple, **characterized in that**
   the axes (S1) of the cylinders (1) are arranged to be at an offset (d) with respect to the axis of the crank journal (11), and
   the phase of a rotation angle of the balance shaft (24) with respect to a rotation angle of the crank journal (11) is retarded by a predetermined angle ($+\alpha$) with respect to such a reference phase that can cancel the combined inertia force generated in a case where the axes (S1) of the cylinders (1) cross the axis of the crank journal (11).

**2.** The balancer mechanism (20) according to claim 1,
wherein the straight engine is a straight three cylinder engine having a first cylinder, a second cylinder, and a third cylinder that are arranged sequentially in series, with the crank arms (12) being spaced apart sequentially at 120°, and wherein the balance weight (25, 26) includes a first balance weight (25) arranged in correspondence with the first cylinder and a second balance weight (26) mounted in correspondence with the third cylinder, the first and second balance weights (25, 26) being retarded by equal amounts ($\alpha$) with respect to the reference phase.

**3.** The balancer mechanism (20) according to claims 1 or 2, wherein, as a ratio between connecting rod length (L) and crank arm radius (R) becomes greater, a retarding amount ($\alpha$) of the phase of the balance shaft (24) with respect to the reference phase becomes smaller.

**4.** The balancer mechanism (20) according to any one of claims 1 to 3, wherein, as an offset amount (d) between the axis (S1) of each of the cylinders (1) and the axis of the crank journal (11) becomes greater, the retarding amount ($\alpha$) of the phase of the balance shaft (24) with respect to the reference phase becomes greater.

**5.** The balancer mechanism (20) according to claims 1 or 2,
wherein the retarding amount $\alpha$ of the phase of the balance shaft (24) with respect to the reference phase is determined in relation to the ratio $\lambda$ between the connecting rod length (L) and the crank arm radius (R) and an offset coefficient using an expression: $\alpha = (147 \cdot \lambda^{-1.15}) \cdot \xi$,
wherein, in the expression, the ratio $\lambda$ is L/R in which L represents the connecting rod length (L) and R represents the crank arm radius (R), and the offset coefficient $\xi$ is d/R in which d represents the offset amount (d) between the axis (S1) of each cylinder (1) and the axis of the crank journal (11), and R represents the crank arm radius (R).

## Patentansprüche

**1.** Ausgleichsmechanismus (20), der bei einem Reihenmotor angewandt ist, wobei der Motor Folgendes aufweist:

eine ungerade Zahl von 3 oder mehr Zylindern (1);
eine Kurbelwelle (10), die einen Kurbelzapfen (11) hat;
Kurbelarme (12), die im Kurbelzapfen (11) in Übereinstimmung mit den jeweiligen Zylindern (1) angeordnet sind und in einem vorbestimmten Winkelintervall beabstandet sind;
einen sich hin und her bewegenden Abschnitt und einen rotierenden Abschnitt, die jeweils eine Masse haben, derart dass in der Kurbelwelle (10) ein Trägheitskräftepaar erzeugt wird; und
ein Kurbelgewicht (21, 22, 23), das in der Kurbelwelle (10) angeordnet ist, um etwas vom Trägheitskräftepaar zu verringern, wodurch in der Kurbelwelle (10) ein kombiniertes Trägheitskräftepaar erzeugt wird,
und der Ausgleichsmechanismus (20) Folgendes umfasst:

eine Ausgleichswelle (24), die parallel zum Kurbelzapfen (11) verläuft und sich mit einer Geschwindigkeit, die gleich einer Rotationsgeschwindigkeit des Kurbelzapfens (11) ist, in einer Richtung entgegengesetzt zu einer Rotationsrichtung des Kurbelzapfens (11) dreht; und
ein Ausgleichsgewicht (25, 26), das in der Ausgleichswelle (24) angeordnet ist, um das kombinierte Trägheitskräftepaar aufzuheben,
**dadurch gekennzeichnet, dass**
die Achsen (S1) der Zylinder (1) so angeordnet sind, dass sie sich bezogen auf die Achse des Kurbelzapfens (11) in einem Versatz (d) befinden, und
die Phase eines Rotationswinkels der Ausgleichswelle (24) gegenüber einem Rotationswinkel des Kurbelzapfens (11) bezüglich einer solchen Bezugsphase, die die kombinierte Trägheitskraft aufheben kann, die in einem Fall erzeugt wird, in dem die Achsen (S1) des Zylinders (1) die Achse des Kurbelzapfens (11) kreuzen, um einen vorbestimmten Winkel (+$\alpha$) verzögert ist.

**2.** Ausgleichsmechanismus (20) nach Anspruch 1,
wobei der Reihenmotor ein Dreizylinderreihenmotor mit einem ersten Zylinder, einem zweiten Zylinder und einem dritten Zylinder ist, die hintereinander in Reihe angeordnet sind, wobei die Kurbelarme (12) hintereinander um 120° beabstandet sind, und
wobei das Ausgleichsgewicht (25, 26) ein erstes Ausgleichsgewicht (25), das in Übereinstimmung mit dem ersten Zylinder angeordnet ist, und ein zweites Ausgleichsgewicht (26), das in Übereinstimmung mit dem dritten Zylinder montiert ist, umfasst, wobei die ersten und zweiten Ausgleichsgewichte (25, 26) bezüglich der Bezugsphase um

gleiche Beträge ($\alpha$) verzögert sind.

3.  Ausgleichsmechanismus (20) nach Anspruch 1 oder 2, wobei ein Verzögerungsbetrag ($\alpha$) der Phase der Ausgleichswelle (24) bezüglich der Bezugsphase kleiner wird, wenn ein Verhältnis zwischen Verbindungsstablänge (L) und Kurbelarmradius (R) größer wird.

4.  Ausgleichsmechanismus (20) nach einem der Ansprüche 1 bis 3, wobei der Verzögerungsbetrag ($\alpha$) der Phase der Ausgleichswelle (24) bezüglich der Bezugsphase größer wird, wenn ein Versatzbetrag (d) zwischen der Achse (S1) jedes Zylinders (1) und der Achse des Kurbelzapfens (11) größer wird.

5.  Ausgleichsmechanismus (20) nach Anspruch 1 oder 2,
    wobei der Verzögerungsbetrag ($\alpha$) der Phase der Ausgleichswelle (24) bezüglich der Bezugsphase in Bezug auf das Verhältnis $\lambda$ zwischen der Verbindungsstablänge (L) und dem Kurbelarmradius (R) und einem Versatzkoeffizienten $\xi$ unter Verwendung eines Ausdrucks: $\alpha = (147 \cdot \lambda^{-1,15}) \cdot \xi$ festgelegt ist,
    wobei in dem Ausdruck das Verhältnis $\lambda$ L/R ist, wobei L die Verbindungsstablänge (L) darstellt und R den Kurbelarmradius (R) darstellt, und der Versatzkoeffizient $\xi$ d/R ist, wobei d den Versatzbetrag (d) zwischen der Achse (S1) jedes Zylinders (1) und der Achse des Kurbelzapfens (11) darstellt und R den Kurbelarmradius (R) darstellt.

## Revendications

1.  Mécanisme d'équilibrage (20) appliqué sur un moteur en ligne, le moteur comprenant :

    un nombre impair de trois cylindres ou plus (1) ;
    un vilebrequin (10) ayant un tourillon de vilebrequin (11) ;
    des bras de manivelle (12) agencés dans le tourillon de vilebrequin (11) en correspondance avec les cylindres (1) respectifs et espacés à un intervalle angulaire prédéterminé ;
    une partie effectuant un mouvement de va-et-vient et une partie rotative, ayant chacune une masse de sorte qu'un couple d'inertie est généré dans le vilebrequin (10) ; et
    un poids de vilebrequin (21, 22, 23) agencé dans le vilebrequin (10) afin de réduire une certaine partie du couple d'inertie, produisant ainsi un couple d'inertie combiné dans le vilebrequin (10),
    le mécanisme d'équilibrage (20) comprenant :

    un arbre d'équilibrage (24) s'étendant parallèlement au tourillon de vilebrequin (11) et tournant dans une direction opposée à la direction de rotation du tourillon de vilebrequin (11) à une vitesse égale à une vitesse de rotation du tourillon de vilebrequin (11) ; et
    un poids d'équilibrage (25, 26) agencé dans l'arbre d'équilibrage (24) afin d'annuler le couple d'inertie combiné,
    **caractérisé en ce que**
    les axes (S1) des cylindres (1) sont agencés pour être à un décalage (d) par rapport à l'axe du tourillon de vilebrequin (11), et
    la phase de l'angle de rotation de l'arbre d'équilibrage (24) par rapport à un angle de rotation du tourillon de vilebrequin (11) est retardée selon un angle prédéterminé (+$\alpha$) par rapport à une telle phase de référence qui peut annuler la force d'inertie combinée générée dans le cas dans lequel les axes (S1) des cylindres (1) croisent l'axe du tourillon de vilebrequin (11).

2.  Mécanisme d'équilibrage (20) selon la revendication 1,
    dans lequel le moteur en ligne est un moteur en ligne à trois cylindres ayant un premier cylindre, un deuxième cylindre et un troisième cylindre qui sont agencés de manière séquentielle en série, avec les bras de manivelle (12) qui sont espacés de manière séquentielle à 120°, et
    dans lequel le poids d'équilibrage (25, 26) comprend un premier poids d'équilibrage (25) agencé en correspondance avec le premier cylindre et un second poids d'équilibrage (26) monté en correspondance avec le troisième cylindre, les premier et second poids d'équilibrage (25, 26) étant retardés selon des quantités égales ($\alpha$) par rapport à la phase de référence.

3.  Mécanisme d'équilibrage (20) selon les revendications 1 ou 2, dans lequel, lorsqu'un rapport entre la longueur de bielle (L) et le rayon de bras de manivelle (R) augmente, une quantité de retard (a) de la phase de l'arbre d'équilibrage (24) par rapport à la phase de référence diminue.

4. Mécanisme d'équilibrage (20) selon l'une quelconque des revendications 1 à 3, dans lequel, lorsqu'une quantité de décalage (d) entre l'axe (S1) de chacun des cylindres (1) et l'axe du tourillon de vilebrequin (11) augmente, la quantité de retard ($\alpha$) de la phase de l'arbre d'équilibrage (24) par rapport à la phase de référence augmente.

5. Mécanisme d'équilibrage (20) selon la revendication 1 ou 2, dans lequel la quantité de retard ($\alpha$) de la phase de l'arbre d'équilibrage (24) par rapport à la phase de référence est déterminée par rapport au rapport $\lambda$ entre la longueur de bielle (L) et le rayon de bras de manivelle (R) et un coefficient de décalage $\xi$, en utilisant une expression :
$\alpha = 147 \cdot \lambda^{-1,15} \cdot \xi$,
dans lequel, dans l'expression, le rapport $\lambda$ est L/R dans lequel L représente la longueur de bielle (L) et R représente le rayon de bras de manivelle (R), et le coefficient de décalage $\xi$ est d/R dans lequel d représente la quantité de décalage (d) entre l'axe (S1) de chaque cylindre (1) et l'axe du tourillon de vilebrequin (11), et R représente le rayon de bras de manivelle (R).

# Fig.1

# Fig.2

Third Cylinder

Second Cylinder

First Cylinder

Rear    26

+α

330°

24

150°

+α

25

10

12

12

Crankshaft
Rotating
Direction
(Clockwise)

Balance Shaft Rotating Direction
(Counterclockwise)

Front

21

11    12    23    12

22

20

# Fig.3(a)

# Fig.3(b)

# Fig.4(b)

$\lambda=3.08, \xi=0.21, \alpha=8.36$

L11, L14, L12, L13

Moment [N·m] — Crank Angle [°]

# Fig.4(a)

$\lambda=3.08, \xi=0.21, \alpha=0$

L1, L4, L2, L3

Moment [N·m] — Crank Angle [°]

# Fig.4(d)

L=30 (=L11+L13)
L=31 (=L12+L14)

133.4

Moment [N·m] — Crank Angle [°]

# Fig.4(c)

L=20 (=L1+L3)
L=21 (=L2+L4)

154.5

Moment [N·m] — Crank Angle [°]

16

**Fig.5**

Legend:
- ♦ — Engine A (Connecting Rod Length/Crank Arm Radius: 3.08)
- ■ — Engine B (Connecting Rod Length/Crank Arm Radius: 3.36)
- ▲ — Engine C (Connecting Rod Length/Crank Arm Radius: 3.08)
- × — Engine C (Connecting Rod Length/Crank Arm Radius: 2.82)
- ✳ — Engine A (Connecting Rod Length/Crank Arm Radius: 3.86)

Y-axis: Phase Angle Increase Amount $\alpha$ [deg]

X-axis: Offset Coefficient $\xi$

# Fig.6

# Fig.7(a)

# Fig.7(b)

Increasing by approximately 16~17%

**Fig.7(a):**
132.7

Total of Yawing

Residual Moment [N·m] (y-axis: 200, 150, 100, 50, 0, -50, -100, -150, -200)

Crank Angle [°] (x-axis: 0, 90, 180, 270, 360)

**Fig.7(b):**
154.5

Total of Yawing

Residual Moment [N·m] (y-axis: 200, 150, 100, 50, 0, -50, -100, -150, -200)

Crank Angle [°] (x-axis: 0, 90, 180, 270, 360)

0

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S542333 A
- FR 2512110 A
- JP S5698531 A
- US 4628876 A
- JP 2007224836 A